Europäisches Patentamt

European Patent Office

Office européen des brevets

(19)

(11) Numéro de publication : **0 155 597**
**B1**

(12) **FASCICULE DE BREVET EUROPÉEN**

(45) Date de publication du fascicule du brevet :
02.03.88

(51) Int. Cl.⁴ : **H 02 M   1/08, H 02 J   3/18**

(21) Numéro de dépôt : **85102566.8**

(22) Date de dépôt : **07.03.85**

(54) **Dispositif de génération d'impulsions de commande de thyristors pour l'alimentation d'une inductance de reglage de la puissance reactive d'un reseau électrique.**

(30) Priorité : **13.03.84 FR 8403837**

(43) Date de publication de la demande :
**25.09.85 Bulletin 85/39**

(45) Mention de la délivrance du brevet :
**02.03.88 Bulletin 88/09**

(84) Etats contractants désignés :
**CH DE FR GB LI SE**

(56) Documents cités :
**EP-A- 0 080 788**
**DE-A- 3 233 202**
**PATENTS ABSTRACTS OF JAPAN, vol. 6, no. 220, 9
octobre 1982, page E 135; & JP - A - 57 110 073
(FUJITSU FANUC K.K.) 08-07-1982**

(73) Titulaire : **CGEE ALSTHOM Société anonyme dite:**
**13, rue Antonin Raynaud**
**F-92309 Levallois-Perret (FR)**

(72) Inventeur : **Charles, Patrick**
**28, avenue de la Chardonnière**
**F-78124 Mareil Sur Mauldre (FR)**

(74) Mandataire : **Weinmiller, Jürgen et al**
**Lennéstrasse 9 Postfach 24**
**D-8133 Feldafing (DE)**

## Description

La présente invention concerne un dispositif de génération d'impulsions de commande de thyristors pour l'alimentation d'une inductance de réglage de la puissance réactive d'un réseau électrique.

On sait que le réglage est effectué par le temps de passage plus ou moins long du courant dans l'inductance et que ceci dépend de l'angle $\alpha$ d'allumage des thyristors, cet angle $\alpha$ ayant pour origine le passage par zéro de la tension.

On connaît un procédé de déclenchement des impulsions de commande à partir d'un signal de commande $U_\alpha$ proportionnel à l'angle $\alpha$ d'allumage que l'on compare à un signal en dents de scie $U_{sy}$ réalisé par l'intégration d'une tension constante, le déclenchement de l'intégration étant synchronisé par chaque passage à zéro de la tension.

Une impulsion est envoyée sur le thyristor chaque fois que $U_{sy} = U_\alpha$.

Un tel procédé est notamment connu par deux conférences publiées au cours du Colloque International sur la Compensation Réactive Asservie tenu à Montréal du 19 au 21 septembre 1979 parrainé par Hydro-Québec et l'Electric Power Research Institute : « Courts-circuits au Poste Rimouski à 230 kV et comportement du compensateur statique de type à inductance contrôlée par thyristors » de Pierre Pelletier et Omer Bourgault et « Application of a Static Var System on the Furnas 138 kV Transmission Network in Brazil » de Jean Bélanger, Luiz Eduardo Nora Dias, Sergio de Azevedo Moraes et Sergio de Oliveira Frontin.

Cependant, ce procédé présente quelques inconvénients :

— Le démarrage de l'intégration étant synchronisé par chaque passage à zéro de la tension, si cette tension présente des défauts tels que des passages par zéro intempestifs au cour d'une alternance, plusieurs impulsions de commande de thyristors peuvent être émises à des instants incontrôlables.

— De même, en présence de tensions harmoniques paires superposées à la tension d'alimentation, les angles $\alpha$ d'amorçage s'écartent de part et d'autre de la valeur de référence entre les alternances positives et négatives engendrant ainsi des courants harmoniques pairs et une composante continue.

Ces courants peuvent à travers l'impédance d'alimentation donner lieu à d'autres tensions harmoniques paires conduisant dans certains cas à l'instabilité du fonctionnement.

Pour remédier à ces inconvénients, on connaît par le texte intitulé « Thyristor and Variable Static Equipement for AC and DC Transmission », présenté par la conférence internationale tenue à Londres du 30 novembre au 3 décembre 1981 et organisée par « Power Division of the Institution of Electrical Engineers », un générateur d'impulsions synchronisé non plus sur la tension mais sur le courant.

Le principe est le suivant :

L'intégration d'une tension constante est déclenchée non plus à chaque passage à zéro de la tension mais à chaque émission d'une impulsion de commande des thyristors et, lorsque le courant s'annule dans les thyristors, on double la pente d'intégration, c'est-à-dire qu'on intègre une tension constante double ; on se retrouve alors sur une dent de scie superposée à celle qui serait fabriquée comment précédemment par intégration d'une même constante à cette valeur double et dont le déclenchement est synchronisé par les passages à zéro de la tension.

Donc, pendant la présence de courant dans les thyristors, c'est-à-dire pendant l'angle de conduction $\sigma$, la pente du signal en dents de scie a une valeur moitié. Cet angle $\sigma$ est lié à l'angle $\alpha$ d'amorçage par la relation suivante : $(\sigma/2) = \pi - \alpha$.

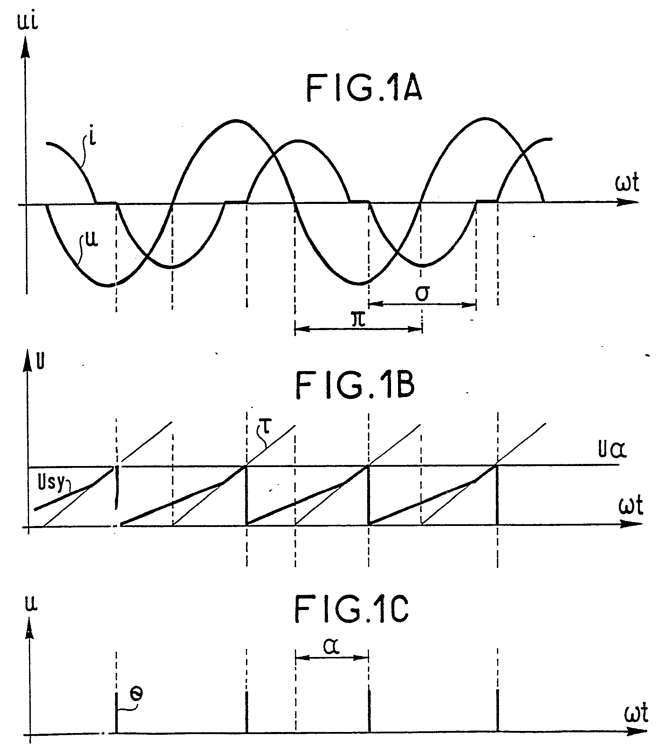

Les figures 1A, 1B et 1C donnent une représentation de ce procédé.

Sur la figure 1A, on a représenté la tension U aux bornes de l'inductance de réglage et le courant i qui traverse cette inductance. L'angle d'allumage des thyristors d'alimentation de l'inductance est définit par l'angle $\alpha$ dont l'origine est le passage par 0 de la tension U.

Sur cette figure, on voit que le temps de conduction est tel que $(\sigma/2) = \pi - \alpha$.

Sur la figure 1B, on a représenté le signal en dents de scie $U_{sy}$ qui sert, en combinaison avec le signal de commande $U_\alpha$, proportionnel à l'angle d'allumage $\alpha$ souhaité, à déterminer les instants d'impulsions.

Sur la figure 1C on a indiqué les impulsions $\theta$ d'allumage.

Sur ces figures, on voit donc que le signal $U_{sy}$, qui est l'intégration d'une tension constante, est déclenché à chaque émission d'une impulsion $\theta$ d'allumage des thyristors et que lorsque le courant i s'éteint, la pente du signal $U_{sy}$ prend une valeur double, ce qui superpose cette partie du signal $U_{sy}$ avec un signal fictif $\tau$ en dent de scie qui serait synchronisé avec les passages par zéro de la tension.

Une telle méthode permet de conserver la précision, même en régime perturbé de la tension du fait que des passages par zéro de la tension ne peuvent plus provoquer de perte de synchronisation par une remise à zéro intempestive du signal $U_{sy}$. Dans cette méthode, le courant est mesuré à partir d'un transformateur de courant.

Cependant, une telle méthode ne donne pas encore satisfaction. En effet, il est nécessaire de détecter la présence ou l'absence de courant pour commander le changement de pente d'intégration. Or, la moindre composante apériodique dans le courant décale les instants d'amorçage et d'extinction de manière dissymétrique ce qui rend le fonctionnement instable.

La présente invention a pour but de pallier cet inconvénient, et a pour objet un dispositif de génération d'impulsions de commande de thyristors pour l'alimentation d'une inductance de réglage de la puissance réactive d'un réseau électrique, ladite inductance étant branchée sur le réseau par l'intermédiaire d'un interrupteur statique bidirectionnel à thyristors, comprenant un générateur de signaux en dents de scie dont la sortie est reliée à une entrée d'un comparateur dont l'autre entrée reçoit un signal de commande de variation de l'angle d'allumage des thyristors, la sortie dudit comparateur étant reliée à un circuit d'élaboration desdites impulsions de commande des thyristors dont la sortie est reliée d'une part aux gâchettes de commande des thyristors et d'autre part à une entrée de remise à zéro du générateur de signaux en dents de scie, ledit générateur comportant des moyens de génération d'un signal de pente a ou 2a, le passage d'un signal de pente a à un signal de pente 2a étant commandé par l'annulation du courant dans ladite inductance, caractérisé en ce qu'il comporte un circuit d'élaboration d'une image du courant dans ladite inductance, image réalisée à partir d'une tension U image de la tension aux bornes de l'inductance qui est envoyée vers un circuit intégrateur dont la sortie est reliée à un circuit d'élaboration d'un signal de remise à zéro dudit intégrateur, commandé par le signal de sortie dudit comparateur, et en ce que la sortie dudit circuit intégrateur est en outre reliée à un circuit élaborant la valeur moyenne dudit courant, dont la sortie est reliée d'une part directement à l'une des deux entrées d'un commutateur à deux entrées et à une sortie commune et d'autre part à l'autre entrée dudit commutateur par l'intermédiaire d'un circuit inverseur, la commande d'inversion du commutateur étant reliée à l'entrée du circuit intégrateur de la tension U, le changement de signe de la tension U provoquant alternativement la commutation vers l'une et l'autre des deux entrées dudit commutateur dont la sortie est reliée à l'une des deux entrées d'un circuit sommateur dont l'autre entrée reçoit une tension de commande $U_\alpha$ de l'angle $\alpha$ d'amorçage, et dont la sortie constitue ledit signal de commande de variation de l'angle d'allumage envoyée audit comparateur.

Ainsi, l'invention utilise la méthode rappelée plus haut en lui apportant une amélioration qui consiste à calculer la valeur moyenne du courant c'est-à-dire sa composante continue et à effectuer une correction $\Delta\alpha$ de l'angle d'amorçage en plus ou en moins autour de la valeur de référence au cours d'une alternance et $-\Delta\alpha$ au cours de l'alternance suivante. En régime établi, ce signal de correction est théoriquement nul. Il n'apparaît qu'au cours de certains régimes transitoires, en particulier lorsque la tension renferme des composantes harmoniques paires. Pour cela, on ne peut pas utiliser, comme dans l'art antérieur, un transformateur d'intensité puisqu'il faut avoir une image fidèle du courant afin de calculer sa valeur moyenne, et que l'utilisation d'un transformateur d'intensité annule au secondaire une éventuelle composante continue.

Selon une réalisation particulière de l'invention, ledit circuit d'élaboration d'un signal de remise à zéro dudit intégrateur comporte un détecteur de seuil positif et un détecteur de seuil négatif reliés en parallèle, la sortie du détecteur de seuil positif étant reliée à l'entrée R d'une première bascule du type RS et la sortie du détecteur de seuil négatif étant reliée à l'entrée R d'une seconde bascule du type RS, l'entrée S de chaque bascule étant reliée à la sortie dudit comparateur et la sortie Q de chaque bascule étant reliée respectivement à l'une et à l'autre des deux entrées d'un circuit logique NI dont la sortie constitue ledit signal de remise à zéro.

De préférence, ledit générateur de signaux en dents de scie à double pente comprend une alimentation à tension constante alimentant d'une part une première entrée d'un circuit sommateur et d'autre part, par l'intermédiaire d'un interrupteur commandé, une deuxième entrée dudit circuit sommateur dont la sortie est reliée à l'entrée d'un circuit intégrateur délivrant en sortie lesdits signaux en dents de scie.

On va maintenant décrire un exemple de réalisation de l'invention en référence au dessin annexé dans lequel

— les figures 1A, 1B et 1C donnent une représentation graphique du procédé utilisé. Ces figures ont été décrites dans la discussion de l'art antérieur mais elles s'appliquent également à l'invention qui applique le même procédé mais dans lequel on apporte une correction à la tension de commande $U_\alpha$ et dans lequel on fabrique une image réelle du courant i dans l'inductance,

— la figure 2 représente une ligne triphasée sur laquelle est branchée un compensateur à inductances alimentées par des interrupteurs statiques bidirectionnels à thyristors,

— la figure 3 est une représentation schématique du dispositif selon l'invention pour commander les impulsions d'allumage des thyristors de l'inductance de l'une des phases du compensateur selon la figure 2.

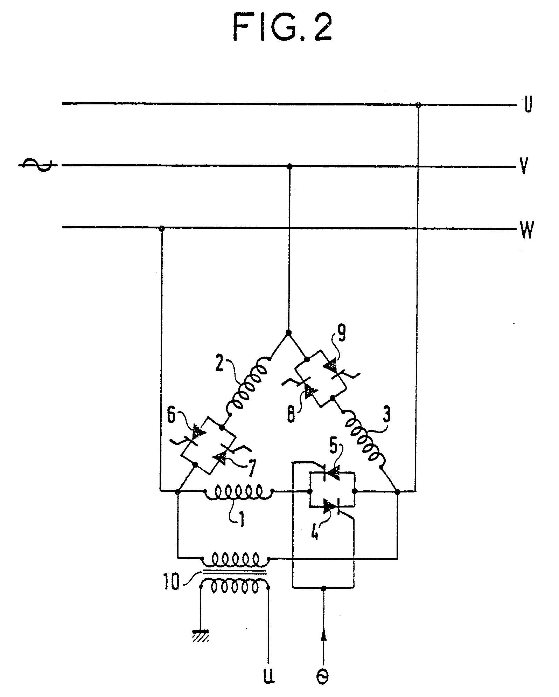

La figure 2 montre un réseau triphasé U, V, W sur lequel est branché un compensateur à inductance 1, 2 et 3 disposées en triangle.

Les inductances sont chacune alimentées par l'intermédiaire d'un interrupteur statique bidirectionnel à thyristors : thyristors 4 et 5 pour l'inductance 1, thyristors 6 et 7 pour l'inductance 2 et thyristors 8 et 9 pour l'inductance 3.

Un transformateur de potentiel 10 est branché entre les phases U et W afin d'obtenir la tension U aux bornes de l'inductance 1. Les impulsions θ représentées sur la figure 1C sont envoyées sur les gâchettes des thyristors 4 et 5.

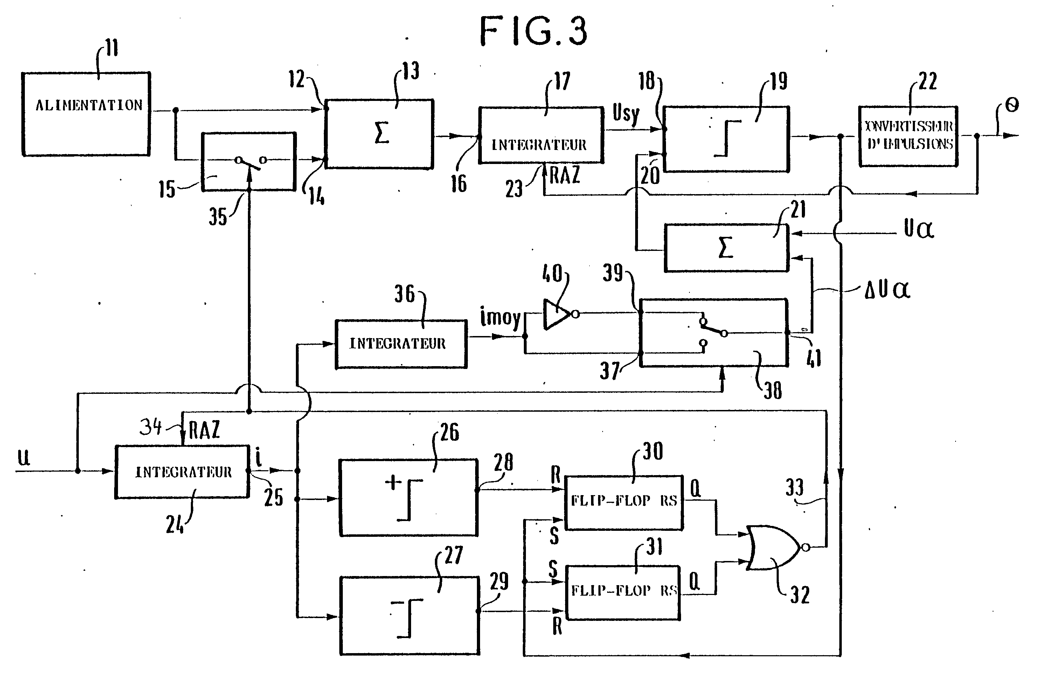

Le dispositif représenté par la figure 3 a pour but de fabriquer ces impulsisons θ. Deux dispositifs identiques permettent également d'envoyer les impulsions d'allumage, respectivement des interrupteurs des inductances 2 et 3 à partir de leur tension respective.

Le dispositif selon l'invention, représenté schématiquement figure 3, comprend une alimentation stabilisée à tension constante 11 dont la sortie est reliée à une première entrée 12 d'un circuit sommateur 13. La sortie de l'alimentation 11 est également reliée à la deuxième entrée 14 du circuit 13 par l'intermédiaire d'un interrupteur commandé 15. On obtient ainsi à la sortie du circuit 13 un signal égal, soit à celui sortant de l'alimentation 11 si l'interrupteur 15 est ouvert soit un signal double si cet interrupteur est fermé. Cela permet, en envoyant ce signal à l'entrée 16 d'un circuit intégrateur 17, d'obtenir en sortie un signal $U_{sy}$ en forme de rampe dont la pente est a ou 2a.

Le signal $U_{sy}$ est envoyé sur une entrée 18 d'un comparateur 19 dont l'autre entrée 20 reçoit un signal de commande de variation de l'angle d'allumage des thyristors 4 et 5 ; ce signal étant égal à la tension de commande $U_\alpha$ de l'angle $\alpha$ d'amorçage plus un signal de correction d'erreur $\Delta U_\alpha$ élaboré comme on le verra plus loin. Un circuit sommateur 21 effectue la somme de ces deux signaux $U_\alpha$ et $\Delta U_\alpha$. Lorsque $U_{sy}$ atteint le signal $U_\alpha + \Delta U_\alpha$, le comparateur 19 délivre un signal envoyé à un convertisseur d'impulsions 22, dont la sortie est reliée aux gâchettes des thyristors 4 et 5 et fournit les impulsions $\theta$ représentées figure 1C.

La sortie du convertisseur d'impulsions 22 est également reliée à une entrée 23 de remise à zéro du circuit intégrateur 17. Ainsi, le signal $U_{sy}$ est remis à zéro à chaque émission d'impulsions c'est-à-dire au début de la phase conductrice de l'un ou l'autre des thyristors 4 et 5.

Le dispositif comprend en outre un circuit d'élaboration d'une image du courant dans l'inductance 1. Ce circuit permet d'une part d'élaborer le signal de correction d'erreur $\Delta U_\alpha$ et d'autre part de commander l'interrupteur 15.

Ce circuit comporte un intégrateur 24 recevant en entrée une tension U donnée par le transformateur de potentiel 10 (figure 2). Sa sortie 25 est reliée à un circuit de remise à zéro de l'intégrateur 24. Il comprend un détecteur de seuil positif 26 et un détecteur de seuil négatif 27 reliés en parallèle sur la sortie 25 et dont les sorties respectives 28 et 29 sont respectivement reliées aux entrées R de bascules 30 et 31 de type RS appelées couramment Flip-Flop RS. Les détecteurs de seuils positifs et négatifs 26 et 27 sont réglés pour une très faible tension $\varepsilon$ respectivement positive et négative.

Les sorties Q des bascules 30 et 31 sont reliées aux deux entrées d'une porte logique NI 32 dont la sortie 33 est reliée à une entrée 34 de remise à zéro de l'intégrateur. L'entrée S des bascules 30 et 31 est commandée par la sortie du comparateur 19. Ainsi, grâce à ce dispositif, on obtient à la sortie 25 de l'intégrateur 24 une image fidèle du courant i dans l'inductance 1 avec son éventuelle composante continue s'il y en a une.

En l'absence de courant dans l'inductance, les sorties Q des bascules 30 et 31 ont la valeur binaire 0 et donc la sortie 33 de l'élément logique NI a la valeur binaire 1 ce qui maintient l'intégrateur 24 à zéro jusqu'à la nouvelle impulsion $\theta$ qui, appliquée à l'entrée 5 des bascules 30 et 31 force leur sortie Q à la valeur binaire 1 et donc l'élément 32 à la valeur binaire 0 permettant de nouveau l'intégration de la tension U.

Afin de provoquer le retour à zéro de la sortie des deux bascules lors de l'annulation du courant, les détecteurs de seuils positif et négatif 26 et 27 ne sont pas réglés à zéro mais à une très faible valeur respectivement $+ \varepsilon$ et $-\varepsilon$. Le signal de remise à zéro de l'intégrateur 24 est aussi envoyé sur une entrée 35 de commande de l'interrupteur 15. Lorsque cette entrée reçoit un signal binaire égal à 1 correspondant à une annulation de courant dans l'inductance, l'interrupteur 15 se ferme ce qui se traduit par le doublement de la pente du signal $U_{sy}$ (figure 1B). Lorsque le signal de commande passe à zéro, l'interrupteur s'ouvre et la pente du signal $U_{sy}$ reprend une valeur moitié.

Enfin, la sortie 25 de l'intégrateur 24 représentant l'image du courant i, est reliée à un circuit élaborant un signal $\Delta U_\alpha$ de correction d'erreur de manière à asservir à zéro la composante continue du courant.

Ce circuit comporte un circuit intégrateur 36 qui donne en sortie un signal correspondant à la valeur moyenne $i_{moy}$ du courant i.

La sortie de l'intégrateur 36 est reliée d'une part à une première entrée 37 d'un commutateur 38 à deux entrées et d'autre part à la deuxième entrée 39 du commutateur 38 par l'intermédiaire d'un circuit inverseur 40. La sortie commune 41 du commutateur achemine le signal de correction $\Delta U_\alpha$ vers l'une des deux entrées du sommateur 21 dont l'autre reçoit la tension de commande $U_\alpha$ de l'angle $\alpha$ d'amorçage des thyristors 4 et 5.

Le dispositif selon l'invention permet d'obtenir d'excellents résultats même avec des tensions perturbées.

## Revendications

1. Dispositif de génération d'impulsions de commande de thyristors pour l'alimentation d'une inductance (1) de réglage de la puissance réactive d'un réseau électrique, ladite inductance étant branchée sur le réseau par l'intermédiaire d'un interrupteur statique bidirectionnel à thyristors (4, 5), comprenant un générateur (11, 13, 17, 15) de signaux $U_{sy}$ en dents de scie dont la sortie est reliée à une entrée (18) d'un comparateur (19) dont l'autre entrée (20) reçoit un signal de commande de variation de l'angle d'allumage des thyristors, la sortie dudit comparateur étant reliée à un circuit (22) d'élaboration desdites impulsions de commande des thyristors dont la sortie est reliée d'une part aux gâchettes de commande des thyristors (4, 5) et d'autre part à une entrée (23) de remise à zéro du générateur de signaux en dents de scie, ledit générateur comportant des moyens (15) de génération d'un signal de pente a ou 2a, le passage d'un signal de pente a à un signal de pente 2a étant commandé par l'annulation du courant dans ladite inductance, caractérisé en ce qu'il comporte un circuit (24 à 34) d'élaboration d'une image du courant dans ladite inductance, réalisée à partir d'une tension U image de la tension aux bornes de l'inductance qui est envoyée vers un circuit intégrateur (24) dont la sortie (25) est reliée à un circuit (26 à 33) d'élaboration d'un signal de remise à zéro dudit intégrateur, commandé par le signal de sortie dudit comparateur (19), et en ce que la sortie (25) dudit circuit intégrateur est en outre reliée à un circuit (36) élaborant la valeur moyenne dudit courant, dont la sortie est reliée d'une part directement à l'une (37) de deux entrées d'un commutateur (38) à deux entrées (37, 39) et à une sortie commune (41) et d'autre part à l'autre entrée (39) dudit commutateur par l'intermédiaire d'un circuit inverseur (40), la commande d'inversion du commutateur étant reliée à l'entrée du circuit intégrateur (24) de la tension U, le changement de signe de la tension U provoquant alternativement la commutation ver l'une et l'autre des deux entrées dudit commutateur dont la sortie (41) est reliée à l'une des deux entrées d'un circuit sommateur (21) dont l'autre entrée reçoit une tension de commande $U_\alpha$ de l'angle $\alpha$ d'amorçage, et dont la sortie constitue ledit signal de commande de variation de l'angle d'allumage envoyé audit comparateur (19).

2. Dispositif selon la revendication 1, caractérisé en ce que ledit circuit d'élaboration d'un signal de remise à zéro dudit intégrateur (24) comporte un détecteur de seuil positif (26) et un détecteur de seuil négatif (27) reliés en parallèle, la sortie (28) du détecteur de seuil positif étant reliée à l'entrée R d'une première bascule (30) du type RS et la sortie (29) du détecteur de seuil négatif étant reliée à l'entrée R d'une seconde bascule (31) du type RS, l'entrée S de chaque bascule étant reliée à la sortie dudit comparateur (19) et la sortie Q de chaque bascule étant reliée respectivement à l'une et à l'autre des deux entrées d'un circuit logique NI (32) dont la sortie (33) constitue ledit signal de remise à zéro.

3. Dispositif selon la revendication 1 ou 2, caractérisé en ce que ledit générateur de signaux en dents de scie à double pente comprend une alimentation à tension constante (11) alimentant d'une part une première entrée (12) d'un circuit sommateur (13) et d'autre part, par l'intermédiaire d'un interrupteur commandé (15), une deuxième entrée (14) dudit circuit sommateur dont la sortie est reliée à l'entrée (16) d'un circuit intégrateur (17) délivrant en sortie lesdits signaux ($U_{sy}$) en dents de scie.

**Claims**

1. A control pulse generator device for controlling thyristors supplying a reactive power regulating inductor (1) in an electrical power network, said inductor being connected to the network via a thyristorized two-way static switch (4, 5), said device comprising a sawtooth signal $U_{sy}$ generator (11, 13, 17, 15) whose output is connected to one input (18) of a comparator (19) the other input (20) whereof receives a control signal for varying the firing angle of the thyristors, the output of said comparator being connected to a circuit (22) for generating said thyristor control pulses, the output of said circuit being connected both to the gates of the thyristors (4, 5) and to a sawtooth signal generator zero reset input (23), said latter generator including means (15) of generating a signal of slope a or 2a, switching between a and 2a-sloped signals being controlled by the disappearance of current from said inductor, characterized in that it includes a circuit (24 to 34) to develop an image of the current in said inductor, said image being based upon a voltage U being itself an image of the voltage across the terminals of the inductor which is fed to an integrator circuit (24) having an output (25) connected to an integrator reset signal generator circuit (26 to 33) driven by the output signal from said comparator (19), and that the output (25) of said integrator circuit is also connected to a circuit (36) establishing the mean value of said current, the output of said latter circuit being connected on the one hand directly to one (37) of the inputs of a two-input (37, 39) switch (38) with a single, common output (41), and on the other hand to the other output (39) of the same switch via an inverter circuit (40), the inversion control for said switch being connected to the input of the voltage U integrator circuit (24), the sign change of voltage U alternately causing switching to one, then the other of the two inputs to said switch whose output (41) drives one of the two inputs of a summing circuit (21), the other input whereof receives a firing angle $\alpha$ control voltage $U_\alpha$ and the output whereof constitutes said control signal for varying said firing angle, going to said comparator (19).

2. A device according to claim 1, characterized in that said integrator reset signal generator circuit (24) comprises a positive threshold detector (26) and a negative threshold detector (27) connected in parallel, the output (28) of the positive threhold detector being connected to the R-input of a first RS flip-flop (30) and the output (29) of the negative threshold detector being connected to the R-input of a second RS flip-flop (31), the S-input of each flip-flop being connected to the output of said comparator (19) and the output Q of each flip-flop being connected respectively to one of the two inputs of a logic NOR gate (32) whose output (33) constitutes said zero reset signal.

3. A device according to claim 1 or 2, characterized in that said dual slope sawtooth signal generator comprises a constant voltage power supply (11) supplying, on the one hand, a first input (12) of a summing circuit, and, on the other hand, via a controlled cut-off switch (15) a second input (14) of said summing circuit, the output whereof is connected to the input (16) of an integrator circuit (17) outputting said sawtooth the signal ($U_{sy}$).

## Patentansprüche

1. Vorrichtung zur Erzeugung von Steuerimpulsen für Thyristoren zur Speisung einer Spule (1), mit der die Blindleistung eines elektrischen Netzes eingestellt wird und die über einen statischen bidirektionalen Schalter mit Thyristoren (4, 5) an das Netz angeschlossen ist, wobei die Vorrichtung einen Generator (11, 13, 17, 15) zur Erzeugung von Sägezahnsignalen $U_{sy}$ aufweist, dessen Ausgang an einen Eingang (18) eines Komparators (19) angeschlossen ist, wobei der andere Eingang (20) des Komparators ein Steuersignal für die Veränderung des Thyristorzündwinkels empfängt und der Ausgang des Komparators an einen Schaltkreis (22) zur Bildung der Thyristorsteuerimpulse angeschlossen ist, wobei der Ausgang dieses Kreises (22) einerseits an die Zündelektroden der Thyristoren (4, 5) und andererseits an einen Nullsetzungseingang (23) des Sägezahnsignalgenerators angeschlossen ist, welcher Mittel (15) zur Erzeugung eines Signals einer Steigung a oder einer Steigung 2a besitzt, wobei der Übergang von einem Signal mit der Steigung a zu einem Signal mit der Steigung 2a von dem Nulldurchgang des Stroms in der Spule gesteuert wird, dadurch gekennzeichnet, daß die Vorrichtung einen Kreis (24 bis 34) zur Erzeugung eines Bildes des Stroms in der Spule besitzt, ausgehend von einer Bildspannung U der Spannung an den Klemmen der Spule, die an einen Integratorkreis (24) angelegt wird, wobei der Ausgang (25) dieses Kreises an einen Kreis (26 bis 33) zur Bildung eines Nullsetzungssignals für den Integrator angeschlossen ist, der vom Ausgangssignal des Komparators (19) gesteuert wird, und daß der Ausgang (25) des Integratorkreises außerdem an einen Schaltkreis (36) zur Bildung des Mittelwerts dieses Stroms angeschlossen ist, dessen Ausgang einerseits unmittelbar mit einem (37) von zwei Eingängen (37, 39) eines Umschalters (38) und andererseits mit dem anderen Eingang (39) des Umschalters über einen Inverterkreis (40) verbunden ist, wobei der Steuereingang für die Umschaltung des Umschalters an den Eingang des Integratorkreises (24) zur Integration der Spannung U verbunden ist und die Vorzeichenumkehr der Spannung U abwechselnd die Umschaltung auf den einen oder anderen der beiden Eingänge des Umschalters hervorruft, dessen Ausgang (41) an einen von zwei Eingängen eines Summierkreises (21) angeschlossen ist, dessen anderer Eingang eine Steuerspannung $U_\alpha$ für die Steuerung des Zündwinkels $\alpha$ empfängt und dessen Ausgang das Steuersignal für die Veränderung des Zündwinkels darstellt, das dem Komparator (19) geliefert wird.

2. Vorrichtung nach Anspruch 1, dadurch gekennzeichnet, daß der Kreis zur Bildung eines Nullsetzungssignals für den Intergrator (24) einen positiven Schwellendetektor (26) und einen negativen Schwellendetektor (27) aufweist, die parallelgeschaltet sind, wobei der Ausgang (28) des positiven Schwellendetektors an den Eingang R einer ersten Kippstufe (30) vom RS-Typ und der Ausgang (29) des negativen Schwellendetektors an den Eingang R einer zweiten Kippstufe (31) vom RS-Typ angeschlossen ist und der Eingang S jeder Kippstufe an den Ausgang des Komparators (19) und der Ausgang Q jeder Kippstufe an einen bzw. den anderen von zwei Eingängen eine logischen ODER-NICHT Kreises (32) angeschlossen sind, dessen Ausgang (33) das Nullsetzungssignal bildet.

3. Vorrichtung nach Anspruch 1 oder 2, dadurch gekennzeichnet, daß der Sägezahngenerator, der Sägezähne mit zweifacher Steigung erzeugt, eine Quelle konstanter Spannung (11) aufweist, mit der einerseits ein erster Eingang (12) eines Summierglieds (13) und andererseits ein zweiter Eingang (14) des Summierkreises über einen gesteuerten Schalter (15) beaufschlagt wird, dessen Ausgang mit dem Eingang (16) eines Integratorkreises (17) verbunden ist, welcher am Ausgang die Sägezahnwesignale ($U_{sy}$) liefet.

FIG.1A

FIG.1B

FIG.1C

# FIG. 2

# FIG.3

0 155 597